(19) Europäisches Patentamt
European Patent Office
Office européen des brevets

(11) EP 1 394 886 A1

(12) **EUROPEAN PATENT APPLICATION**
published in accordance with Art. 158(3) EPC

(43) Date of publication:
**03.03.2004 Bulletin 2004/10**

(21) Application number: **02720526.9**

(22) Date of filing: **19.04.2002**

(51) Int Cl.[7]: **H01M 10/40**, H01M 2/36, H01G 9/038

(86) International application number:
**PCT/JP2002/003936**

(87) International publication number:
**WO 2002/093678 (21.11.2002 Gazette 2002/47)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.05.2001 JP 2001140569**

(71) Applicant: **Nisshinbo Industries, Inc.**
**Chuo-ku, Tokyo 103-8650 (JP)**

(72) Inventors:
- **SATO, Takaya, c/o NISSHINBO INDUSTRIES, INC. Midori-ku, Chiba-shi,Chiba 267-0056 (JP)**
- **IIDA, Hiroki, c/o NISSHINBO INDUSTRIES, INC. Midori-ku, Chiba-shi,Chiba 267-0056 (JP)**
- **MARUO, Tatsuya c/o NISSHINBO INDUSTRIES, INC. Midori-ku, Chiba-shi, Chiba 267-0056 (JP)**
- **BANNO, Kimiyo, c/o NISSHINBO INDUSTRIES, INC. Midori-ku, Chiba-shii Chiba 267-0056 (JP)**

(74) Representative: **Stuart, Ian Alexander et al**
**MEWBURN ELLIS**
**York House**
**23 Kingsway**
**London WC2B 6HP (GB)**

# (54) POLYMER GEL ELECTROLYTE-USE COMPOSITION AND METHOD OF POURING NON-AQUEOUS ELECTROLYTE SOLUTION

(57) A polymer gel electrolyte-forming composition which includes a pregel composition having a viscosity at 20°C of at most 100 cP is impregnated into an electrical double-layer capacitor assembly or a cell assembly composed of a positive electrode, a negative electrode and a separator. This process enables the polymer gel electrolyte-forming composition to rapidly and uniformly penetrate into the cell or capacitor assembly and provides a battery or capacitor having excellent cycle properties.



Printed by Jouve, 75001 PARIS (FR)

## Description

### TECHNICAL FIELD

The present invention relates to methods for introducing polymer gel electrolyte-forming compositions and nonaqueous electrolyte solutions into cell assemblies and electrical double-layer capacitor assemblies.

### BACKGROUND ART

Electrolytes used in secondary cells and capacitors have until now been primarily low-molecular-weight substances that are liquid at or above room temperature, such as water, ethylene carbonate, propylene carbonate, and tetrahydrofuran. In lithium-based cells in particular, use is commonly made of low-molecular-weight organic liquid electrolytes which tend to evaporate, ignite and burn rather easily. To ensure long-term stability, the airtightness of the container must be increased by using a metal can as the outer cell enclosure.

By contrast, the use of a polymer as the electrolyte enables an electrolyte to be obtained which has a very low volatility and is not prone to evaporation. Moreover, a polymer electrolyte having a sufficiently high molecular weight can even be used as a so-called solid electrolyte that does not exhibit fluidity at or above room temperature. Such polymer electrolytes thus offer the dual advantages of acting as a solvent for ion-conductive salts and of solidifying the electrolyte.

Furthermore, batteries which are made using a solid polymer electrolyte pose no risk of equipment damage due to liquid leakage and allow for a cell design in which the electrolyte serves also as the separator, thus facilitating cell miniaturization.

Such polymer electrolytes have been described in the literature. In 1978, researchers led by Armond at l'Université de Grenoble in France discovered that lithium perchlorate dissolves in solid polyethylene oxide and reported that when a lithium salt is dissolved to a concentration of 1 M in polyethylene oxide having a molecular weight of about 2,000, the resulting complex exhibits an ionic conductivity at room temperature of about $10^{-7}$ S/cm. They also found that when 1 M of lithium salt is dissolved in polyethylene oxide having a molecular weight of about 200, which is liquid at room temperature, the ionic conductivity at room temperature is about $10^{-4}$ to $10^{-5}$ S/cm. Thus, it is known that polymeric substances such as polyethylene oxide having the ability to dissolve ion-conductive salts function as electrolytes.

As noted above, polyethylene oxide, the most thoroughly investigated of these polymers, has a good ability to dissolve ion-conductive salts. However, because it is a semi-crystalline polymer, when a large quantity of metallic salts is dissolved therein, these salts form a pseudo-crosslinked structure between the polymer chains, leading to crystallization of the polymer. As a result, the actual ionic conductivity is much lower than the expected value.

According to the literature to date, ion-conductive polymer electrolytes composed entirely of a straight-chain polymer such as polyethylene oxide, polypropylene oxide or polyethyleneimine generally have an ionic conductivity at room temperature of about $10^{-7}$ S/cm, and at best not higher than about $10^{-6}$ S/cm.

Such solid electrolytes thus have a lower ionic conductivity than liquid electrolytes, making it difficult to achieve a sufficiently large cell capacity.

Moreover, solid electrolytes containing no liquid components whatsoever usually have a lower ionic conductivity than liquid electrolytes. Various efforts have been made to impart solid electrolytes with a higher ionic conductivity.

Recently, polymer gel electrolytes that are complexes of liquid electrolytes with solid polymer electrolytes are being developed and applied in practice as one solution to this-problem. Such polymer gel electrolytes are gel-like materials composed of a polymer network structure within which a liquid electrolyte is retained. Compared with earlier solid electrolytes, contact with the active material is good and the presence of a liquid electrolyte provides a better ionic conductivity.

We earlier described how excellent solid polymer electrolytes can be prepared by using a semi-interpenetrating polymer network ("semi-IPN") structure as the matrix polymer in the solid polymer electrolyte. We also disclosed that when this structure is used in a polymer gel electrolyte, it is possible to obtain polymer gel electrolytes of excellent electrical conductivity, gel strength and adhesion (International Applications WO 00/56815 and WO 00/57440).

Batteries and capacitors made with such polymer gel electrolytes are generally manufactured as follows. In the case of lithium ion cells, a polymer gel electrolyte-forming composition made up of a lithium salt-containing electrolyte and a polymerizable constituent is coated onto the surface of a positive electrode or a negative electrode. The composition is then heated or exposed to ultraviolet light to polymerize and cure the polymerizable compound therein and thus form a polymer gel electrolyte membrane on the electrode surface, following which a counter electrode (an electrode of the opposite polarity) is placed thereon. Alternatively, polymerization and curing may be carried out after first placing the counter electrode on the coated electrode. This procedure gives a layered cell assembly composed of a positive electrode and a negative electrode with a polymer gel electrolyte membrane situated therebetween.

In another method of manufacture, a cell assembly is constructed by arranging a positive electrode and a carbon negative electrode opposite each other across an intervening separator material. The cell assembly is placed in an outer enclosure, following which a polymer gel electrolyte-forming composition made up of a lithium salt-containing electrolyte, a polymerizable compound and an organic solvent is introduced into the enclosure in such a way that the composition penetrates into the gap between the positive and negative electrodes. The polymerizable compound in the polymer gel electrolyte-forming composition is then polymerized and cured, forming a polymer gel electrolyte membrane between the positive and negative electrodes.

When a battery or other electrochemical device is manufactured in this way by a method that involves impregnating a polymer gel electrolyte-forming composition into a cell assembly and curing, polymer gel electrolyte-forming compositions which have a low viscosity can uniformly and rapidly penetrate into the cell assembly and thus provide excellent productivity and cell performance.

However, because polymer gel electrolyte-forming compositions generally have a high viscosity and do not easily penetrate into a cell or capacitor assembly, in order to manufacture batteries and capacitors of adequate performance, a considerable length of time is required for the composition to penetrate into the cell or capacitor assembly. This lowers the productivity during manufacture of such cells and capacitors.

## DISCLOSURE OF THE INVENTION

The present invention was conceived in light of the above circumstances. The objects of this invention are to provide methods for introducing polymer gel electrolyte-forming compositions and nonaqueous electrolyte solutions, which methods are able to rapidly and uniformly impregnate the polymer gel electrolyte-forming composition or nonaqueous electrolyte solution into a cell or capacitor assembly and can provide batteries or capacitors having excellent cycle properties and other characteristics.

The inventors have conducted extensive investigations in order to achieve the above objects. As a result, they have found that when a polymer gel electrolyte-forming composition which includes a pregel composition having a viscosity within a specific range is used as the composition to be introduced, and preferably when a polymer gel electrolyte-forming composition or a nonaqueous electrolyte solution is introduced into a cell or capacitor assembly, by preheating the cell or capacitor assembly and, optionally, setting the polymer gel electrolyte-forming composition or the nonaqueous electrolyte solution to a temperature lower than the temperature of the heated cell or capacitor assembly, introduction into the cell or capacitor assembly can be rapidly and uniformly carried out, thus making it possible to obtain a secondary cell or an electrical double-layer capacitor having excellent cycle properties. This discovery led ultimately to the present invention.

Accordingly, the invention provides the following.

(1) A method of introducing a polymer gel electrolyte-forming composition into an electrical double-layer capacitor assembly or a cell assembly composed of a positive electrode, a negative electrode and a separator, the method being characterized by impregnating a polymer gel electrolyte-forming composition that includes a pregel composition having a viscosity at 20°C of at most 100 cP into the assembly.

(2) The method of introducing a polymer gel electrolyte-forming composition of (1) above, which method is characterized by heating the electrical double-layer capacitor assembly or cell assembly to at least 40°C then impregnating the heated assembly with the polymer gel electrolyte-forming composition.

(3) The method of introducing a polymer gel electrolyte-forming composition of (2) above, which method is characterized in that the polymer gel electrolyte-forming composition has a temperature that is lower than the temperature of the heated assembly.

(4) The method of introducing a polymer gel electrolyte-forming composition of (1), (2) or (3) above, which method is characterized in that the polymer gel electrolyte-forming composition has a viscosity at 20°C of at most 100 cP and gels at 50°C or higher.

(5) A method of introducing a polymer gel electrolyte-forming composition into an electrical double-layer capacitor assembly or a cell assembly composed of a positive electrode, a negative electrode and a separator, the method being characterized by heating the assembly to at least 40°C, then impregnating it with the polymer gel electrolyte-forming composition.

(6) The method of introducing a polymer gel electrolyte-forming composition of (5) above, which method is characterized in that the polymer gel electrolyte-forming composition has a temperature that is lower than the temperature of the heated assembly.

(7) A method of introducing a nonaqueous electrolyte solution into an electrical double-layer capacitor assembly or a cell assembly composed of a positive electrode, a negative electrode and a separator, the method being characterized by heating the assembly to at least 40°C, then impregnating the heated assembly with the nonaqueous electrolyte solution.

(8) The method of introducing a nonaqueous electrolyte solution of (7) above, which method is characterized in that the nonaqueous electrolyte solution has a temperature that is lower than the temperature of the heated assembly.
(9) The method of introducing a nonaqueous electrolyte solution of (7) or (8) above, which method is characterized in that the nonaqueous electrolyte solution includes (A) 0.01 to 7 wt% of at least one compound selected from Compound Group (A) below, (B) an ion-conductive salt, and (C) an organic electrolyte.

(A) maleic anhydride and derivatives thereof (A1)
N-methylmaleimide and derivatives thereof (A2)
N-vinylpyrrolidone and derivatives thereof (A3)
tetrahydrofurfuryl (meth)acrylate and derivatives thereof (A4)
vinyloxazoline and derivatives thereof (A5)
propanesultone, butanesultone and derivatives thereof (A6)
vinylene carbonate and derivatives thereof (A7)
N-vinylcaprolactam and derivatives thereof (A8)
2-vinyl-1,3-dioxolane and derivatives thereof (A9)
vinylethylene carbonate and derivatives thereof (A10)
butadienesulfone (A11)
fluoroethylene carbonate (A12)
ethylene sulfite and derivatives thereof (A13)

## BEST MODE FOR CARRYING OUT THE INVENTION

The invention is described more fully below.

The inventive method of introducing a polymer gel electrolyte-forming composition into an electrical double-layer capacitor assembly or a cell assembly composed of a positive electrode, a negative electrode and a separator is characterized by impregnating a polymer gel electrolyte-forming composition that includes a pregel composition having a viscosity at 20° C of at most 100 cP into the assembly.

The pregel composition of the invention is composed of a compound having a reactive double bond and a straight-chain or branched linear polymeric compound. If the pregel composition has a viscosity at 20°C of more than 100 cP, the viscosity of the polymer gel electrolyte-forming composition containing this pregel composition cannot easily be lowered. As a result, the composition will have a diminished ability to penetration into the cell or capacitor assembly. Moreover, even if the polymer gel electrolyte-forming composition has a low viscosity, a pregel composition of a high viscosity will have a larger excluded volume within the nonaqueous electrolyte, lowering its solubility in the nonaqueous electrolyte and making it impossible to obtain the polymer gel electrolyte-forming composition as a homogeneous solution. Also, a high viscosity means that molecular motion arises with greater difficult, resulting in diminished reactivity. It is preferable for the pregel composition to have a viscosity at 20°C in a range of up to 50 cP. The above viscosities are values measured with a Brookfield viscometer.

The compound having a reactive double bond which is a constituent of the pregel composition may be any reactive double bond-bearing compound without particular limitation. Illustrative examples include compounds having two or more reactive double bonds on the molecule, such as divinylbenzene, divinylsulfone, allyl methacrylate, ethylene glycol dimethacrylate, diethylene glycol dimethacrylate, triethylene glycol dimethacrylate, polyethylene glycol dimethacrylate (average molecular weight, 200 to 1,200), 1,3-butylene glycol dimethacrylate, 1,6-hexanediol dimethacrylate, neopentyl glycol dimethacrylate, polypropylene glycol dimethacrylate (average molecular weight, 400), 2-hydroxy-1,3-dimethacryloxypropane, 2,2-bis[4-(methacryloxyethoxy)phenyl]propane, 2,2-bis[4-(methacryloxyethoxy-diethoxy)phenyl]propane, 2,2-bis[4-(methacryloxyethoxy-polyethoxy)phenyl]propane, ethylene glycol diacrylate, diethylene glycol diacrylate, triethylene glycol diacrylate, polyethylene glycol diacrylate (average molecular weight, 200 to 1,000), 1,3-butylene glycol diacrylate, 1,6-hexanediol diacrylate, neopentyl glycol diacrylate, polypropylene glycol diacrylate (average molecular weight, 400), 2-hydroxy-1,3-diacryloxypropane, 2,2-bis[4-(acryloxyethoxy)phenyl]propane, 2,2-bis[4-(acryloxyethoxy-diethoxy)phenyl]propane, 2,2-bis[4-(acryloxyethoxy-polyethoxy)phenyl]propane, trimethylolpropane triacrylate, trimethylolpropane trimethacrylate, tetramethylolmethane triacrylate, tetramethylolmethane tetraacrylate, water-soluble urethane diacrylate, water-soluble urethane dimethacrylate, tricyclodecane dimethanol acrylate, hydrogenated dicyclopentadiene diacrylate, polyester diacrylate and polyester dimethacrylate.

If necessary, a compound having one acrylic acid group or methacrylic acid group on the molecule may be added. Examples of such compounds include acrylic and methacrylic acid esters such as glycidyl methacrylate, glycidyl acrylate, methoxydiethylene glycol methacrylate, methoxytriethylene glycol methacrylate and methoxypolyethylene glycol methacrylate (average molecular weight, 200 to 1,200), as well as methacryloyl isocyanate, 2-hydroxymethylmethacrylic acid and N,N-dimethylaminoethylmethacrylic acid. Other reactive double bond-containing compounds may

be added as well, such as acrylamides (e.g., N-methylolacrylamide, methylenebisacrylamide, diacetoneacrylamide), and vinyl compounds such as vinyloxazolines.

To form a polymer three-dimensional network structure, a compound having at least two reactive double bonds on the molecule must be added. That is, a three-dimensional network structure cannot be formed with only compounds such as methyl methacrylate having but a single reactive double bond. At least some addition of a compound bearing two or more reactive double bonds is required.

Of the above reactive double bond-bearing compounds, especially preferred reactive monomers include polyoxyalkylene component-bearing diesters of general formula (1) below. The use of such a compound in combination with a polyoxyalkylene component-bearing monoester of formula (2) below and a triester is recommended.

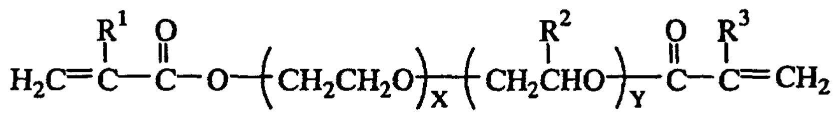

(1)

In formula (1), $R^1$ to $R^3$ are each independently a hydrogen atom or an alkyl group having 1 to 6 carbons, and preferably 1 to 4 carbons, such as methyl, ethyl, n-propyl, i-propyl, n-butyl, i-butyl, s-butyl and t-butyl; and the letters X and Y satisfy the condition $X \geq 1$ and $Y \geq 0$ or the condition $X \geq 0$ and $Y \geq 1$. $R^1$ to $R^3$ are most preferably methyl, ethyl, n-propyl, i-propyl, n-butyl, i-butyl, s-butyl or t-butyl.

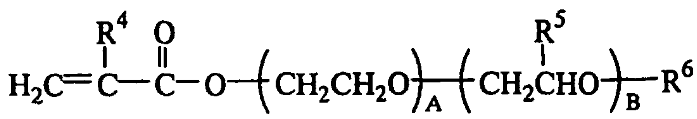

(2)

In formula (2), $R^4$ to $R^6$ are each independently a hydrogen atom or an alkyl group having 1 to 6 carbons, and preferably 1 to 4 carbons, such as methyl, ethyl, n-propyl, i-propyl, n-butyl, i-butyl, s-butyl and t-butyl; and the letters A and B satisfy the condition $A \geq 1$ and $B \geq 0$ or the condition $A \geq 0$ and $B \geq 1$. $R^4$ to $R^6$ are most preferably methyl, ethyl, n-propyl, i-propyl, n-butyl, i-butyl, s-butyl or t-butyl.

Preferred examples of the compound of above formula (1) are those in which X is 2 or 9, Y is 0, and both $R^1$ and $R^3$ are $CH_3$. Preferred examples of the compound of above formula (2) are those in which A is 2 or 9, B is 0, and both $R^4$ and $R^6$ are $CH_3$.

The triester is preferably trimethylolpropane trimethacrylate.

The relative proportions of the polyoxyalkylene component-bearing diester to polyalkylene component-bearing monoesters and triesters are suitably selected according to the length of the polyoxyalkylene components and are not subject to any particular limitation. However, to enhance the gel strength, it is preferable for the diester/monoester ratio to be in a range of 0.1 to 2, and especially 0.3 to 1.5, and for the diester/triester ratio to be in a range of 2 to 15, and especially 3 to 10.

No particular limitation is imposed on the straight-chain or branched linear polymeric compound, provided it is a linear polymeric compound which is capable of adjusting the viscosity of the pregel composition to 100 cP or less. Examples of such polymeric compounds include (a) hydroxyalkyl polysaccharide derivatives, (b) oxyalkylene branched polyvinyl alcohol derivatives, (c) polyglycidol derivatives, and (d) cyano-substituted monovalent hydrocarbon group-bearing polyvinyl alcohol derivatives.

Examples of suitable hydroxyalkyl polysaccharide derivatives (a) include (1) hydroxyethyl polysaccharides obtained by reacting ethylene oxide with a polysaccharide of natural origin such as cellulose, starch or pullulan, (2) hydroxypropyl polysaccharides obtained by reacting propylene oxide with such polysaccharides, and (3) dihydroxypropyl polysaccharides obtained by reacting glycidol or 3-chloro-1,2-propanediol with such polysaccharides. Some or all of the hydroxyl groups on these hydroxyalkyl polysaccharides may be capped with substituents through ester or ether linkages.

The above hydroxyalkyl polysaccharides have a molar substitution of 2 to 30, and preferably 2 to 20. At a molar substitution of less than 2, the ability of the polysaccharide to dissolve electrolyte salts may become so low as to make it unsuitable for use.

Oxyalkylene branched polyvinyl alcohol derivatives (b) suitable for use as the polymeric compound include those which bear on the molecule polyvinyl alcohol units of general formula (3) below, which have an average degree of polymerization of at least 20, and in which some or all of the hydroxyl groups on the polyvinyl alcohol units are

substituted with oxyalkylene-bearing groups to an average molar substitution of at least 0.3.

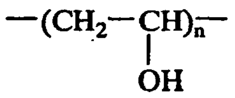

(3)

In formula (3), the letter n is preferably from 20 to 10,000.

Because this type of polymeric compound has a high oxyalkylene fraction, it has the ability to dissolve a large amount of ion-conductive salt. In addition, the molecule contains many oxyalkylene segments which permit the movement of ions, resulting in a high ion mobility. This type of polymeric compound is thus capable of exhibiting a high ionic conductivity. Moreover, because such polymeric compounds have a high tackiness, they act as a binder component and are capable of firmly bonding the positive and negative electrodes. In addition, compositions obtained by dissolving an ion-conductive salt to a high concentration in a polymer electrolyte-forming polymer made of this polymeric compound are highly suitable for use as polymer gel electrolytes for film cells.

Examples of such polymeric compounds include [1] polymeric compounds obtained by reacting a polyvinyl alcohol unit-bearing polymeric compound with an oxirane compound such as ethylene oxide, propylene oxide or glycidol (e.g., dihydroxypropylated polyethylene vinyl alcohol, propylene oxide-modified polyvinyl alcohol); and [2] polymeric compounds obtained by reacting a polyvinyl alcohol unit-bearing polymeric compound with a polyoxyalkylene compound having terminal hydroxy-reactive substituents.

The reaction of the polyvinyl alcohol unit-bearing polymeric compound with an oxirane compound or an oxyalkylene compound can be carried out using a basic catalyst such as sodium hydroxide, potassium hydroxide and various amine compounds.

Here, the polyvinyl alcohol unit-bearing polymeric compound is a polymeric compound which has polyvinyl alcohol units on the molecule, which has a number-average degree of polymerization of at least 20, preferably at least 30, and most preferably at least 50, and in which some or all of the hydroxyl groups on the polyvinyl alcohol units are substituted with oxyalkylene-containing groups. For the sake of handleability, the upper limit in the number-average' degree of polymerization in this case is preferably 2,000 or less, more preferably 500 or less, and most preferably 200 or less.

It is most advantageous for the polyvinyl alcohol unit-bearing polymeric compound to be a homopolymer which satisfies the above range in the number-average degree of polymerization and in which the fraction of polyvinyl alcohol units within the molecule is at least 98 mol%. However, use can also be made of polyvinyl alcohol unit-bearing polymeric compounds which satisfy the above range in the number-average degree of polymerization and have a polyvinyl alcohol fraction of preferably at least 60 mol%, and more preferably at least 70 mol%. Illustrative examples include polyvinyl formal in which some of the hydroxyl groups on the polyvinyl alcohol have been converted to formal, modified polyvinyl alcohols in which some of the hydroxyl groups on the polyvinyl alcohol have been alkylated, poly(ethylene vinyl alcohol), partially saponified polyvinyl acetate, and other modified polyvinyl alcohols.

Some or all of the hydroxyl groups on the polyvinyl alcohol units of the polymeric compound are substituted with oxyalkylene-containing groups (moreover, some of the hydrogen atoms on these oxyalkylene groups may be substituted with hydroxyl groups) to an average molar substitution of at least 0.3. The proportion of hydroxyl groups substituted with oxyalkylene-containing groups is preferably at least 30 mol%, and more preferably at least 50 mol%. The average molar substitution (MS) can be determined by accurately measuring the weight of the polyvinyl alcohol charged and the weight of the reaction product.

The polyglycidol derivative serving as component (c) is a compound containing units of formula (4) below (referred to hereinafter as "A units")

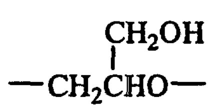

(4)

and units of formula (5) (referred to hereinafter as "B units")

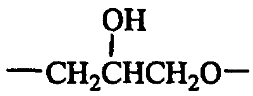

(5).

The ends of the molecular chains on the compound are capped with specific substituents.

The polyglycidol can be prepared by polymerizing glycidol or 3-chloro-1,2-propanediol, although it is generally desirable to carry out polymerization using glycidol as the starting material, and using a basic catalyst or a Lewis acid catalyst.

The total number of A and B units on the polyglycidol molecule is preferably at least two, more preferably at least six, and most preferably at least ten. There is no particular upper limit, although the total number of such groups generally is not more than about 10,000. The total number of these units may be set as appropriate for the required flowability, viscosity and other properties of the polyglycidol. The ratio of A units to B units (A:B) on the molecule is within a range of preferably 1/9 to 9/1, and especially 3/7 to 7/3. The A and B units do not appear in a regular order, and may be arranged in any combination.

The polyglycidol has a polyethylene glycol equivalent weight-average molecular weight (Mw), as determined by gel permeation chromatography (GPC), within a range of preferably 200 to 730,000, more preferably 200 to 100,000, and most preferably 600 to 20,000. The polydispersity (Mw/Mn) is preferably 1.1 to 20, and most preferably 1.1 to 10.

Some or all, and preferably at least 10 mol%, of the hydroxyl groups on these linear polymeric compounds (a) to (c) may be capped with one or more monovalent substituent selected from among halogen atoms, substituted and unsubstituted monovalent hydrocarbon groups of 1 to 10 carbons, $R^7CO$- groups (wherein $R^7$ is a substituted or unsubstituted monovalent hydrocarbon group of 1 to 10 carbons), $R^7{}_3Si$- groups (wherein $R^7$ is as defined above); amino groups, alkylamino groups and phosphorus atom-containing groups to form a polymer derivative having capped hydroxyl groups.

Illustrative examples of the substituted and unsubstituted monovalent hydrocarbon groups of 1 to 10 carbons include alkyls such as methyl, ethyl, propyl, isopropyl, t-butyl and pentyl; aryls such as phenyl and tolyl; aralkyls such as benzyl; alkenyls such as vinyl; and any of the foregoing in which some or all of the hydrogen atoms have been substituted with halogen atoms, cyano groups, hydroxyl groups or amino groups. Any one or combination of two or more of these types of groups may be used.

The hydroxyl groups on oxyalkylene chain-bearing linear polymer compounds (a) to (c) are capped with the above substituents for the following purposes.

(1) In a polymer containing a high concentration of ion-conductive salt, the cations and the counter ions (anions) which have dissociated readily recombine within a polymer matrix having a low dielectric constant, resulting in a decline in conductivity. Because increasing the polarity of the polymer matrix discourages ion association, one purpose is to increase the dielectric constant of the matrix polymer by introducing polar groups onto the hydroxyl groups of oxyalkylene group-bearing linear polymeric compounds (a) to (c).

(2) Another purpose is to confer linear polymeric compounds (a) to (c) with desirable characteristics, such as hydrophobic properties and fire retardance.

To increase the dielectric constant of linear polymeric compounds (a) to (c) (purpose (1) above), the oxyalkylene chain-bearing linear polymeric compounds (a) to (c) are reacted with a hydroxy-reactive compound so as to cap the hydroxyl groups on these linear polymeric compounds with highly polar substituents.

Although the highly polar substituents used for this purpose are not subject to any particular limitation, neutral substituents are preferable to ionic substituents. Exemplary substituents include substituted and unsubstituted monovalent hydrocarbon groups of 1 to 10 carbons, and $R^7CO$- groups (wherein $R^7$ is as defined above). If necessary, capping may also be carried out with other suitable substituents, such as amino groups or alkylamino groups.

To confer linear polymeric compounds (a) to (c) with hydrophobic properties and fire retardance (purpose (2) above), the hydroxyl groups on the above linear polymeric compounds may be capped with, for example, halogen atoms, $R^7{}_3Si$- groups (wherein $R^7$ is as defined above) or phosphorus-containing groups.

Describing the above substituents more specifically, examples of suitable halogen atoms include fluorine, bromine and chlorine. The substituted or unsubstituted monovalent hydrocarbon groups of 1 to 10 carbons (preferably 1 to 8 carbons) may be the same as those mentioned above.

Examples of suitable $R^7{}_3Si$- groups include those in which $R^7$ represents the same substituted or unsubstituted monovalent hydrocarbon groups having 1 to 10 carbons (preferably 1 to 6 carbons) as above. $R^7$ preferably stands for alkyl groups. Trialkylsilyl groups, and especially trimethylsilyl groups, are preferred.

Additional examples of suitable substituents include amino groups, alkylamino groups and phosphorus-containing groups.

The proportion of end groups capped with the above substituents is at least 10 mol%, preferably at least 50 mol%, and most preferably at least 90 mol%. It is even possible to cap substantially all the end groups with the above substituents, representing a capping ratio of about 100 mol%.

Because capping all the hydroxyl end groups on the polymer molecular chain with halogen atoms, $R^7{}_3Si$-groups or phosphorus-containing groups may lower the ion-conductive salt-dissolving ability of the polymer itself, it is essential to introduce a suitable amount of substituents while taking into account the degree of such solubility. Specifically, it is advantageous to cap 10 to 95 mol%, preferably 50 to 95 mol%, and most preferably 50 to 90 mol%, of all the end groups (hydroxyl groups).

In the invention, of the above-mentioned substituents, cyano-substituted monovalent hydrocarbon groups are especially preferred. Specific examples include cyanoethyl, cyanobenzyl, cyanobenzoyl and other substituents having cyano groups bonded to an alkyl group.

The above-mentioned cyano-substituted monovalent hydrocarbon group-bearing polyvinyl alcohol derivative (d) is preferably a polymeric compound which bears on the molecule polyvinyl alcohol units, which has an average degree of polymerization of at least 20, preferably at least 300, and more preferably at least 1,000, and in which some or all of the hydroxyl groups on the polyvinyl alcohol units are substituted with cyano-substituted monovalent hydrocarbon groups.

Because this polymeric compound has relatively short side chains, when dissolved in the electrolyte, the excluded volume in the solution is small and less intertwining of the side chains occurs. Compared with other polymeric compounds of about the same average molecular weight but having long side chains, the use of this polymeric compound provides polymer gel electrolyte forming compositions which have even less of a tendency to increase in viscosity at the same temperature and concentration. That is, because a polymer gel electrolyte can be obtained using a low concentration of pregel composition, the polymer gel electrolyte-forming composition can be held to a low viscosity. This allows impregnation of the composition into a cell or capacitor assembly to be carried out rapidly, enabling the productivity and performance of the cell or capacitor to be enhanced.

Examples of such polymeric compounds include polyvinyl alcohols in which some or all of the hydroxyl groups have been substituted with cyanoethyl, cyanobenzyl or cyanobenzoyl groups. Cyanoethylated polyvinyl alcohol is especially, preferred because the side chains are short.

Various known methods may be used to substitute the hydroxyl groups on the polyvinyl alcohol with cyano-substituted monovalent hydrocarbon groups.

In the various above polymeric compounds, the "average molar substitution" is an indicator of how many moles of oxyalkylene-containing groups or cyano-substituted monovalent hydrocarbon groups have been introduced onto the molecule per vinyl alcohol unit.

The above-described polymer gel electrolyte-forming composition is composed of the above-described pregel composition, an ion-conductive salt and an organic electrolyte. For good penetration into a cell or capacitor assembly, it is desirable that this polymer gel electrolyte-forming composition be adjusted for use to a viscosity at 20°C, as measured with a Brookfield viscometer, of not more than 100 cP, preferably not more than 50 cP, and most preferably 30 cP or less. In the invention, by using a pregel composition having a viscosity of 100 cP or less, the viscosity of the polymer gel electrolyte-forming composition can easily be set to 100 cP or less.

Any ion-conductive salt that is used in electrochemical devices such as lithium secondary cells and electrical double-layer capacitors may be employed, including alkali metal salts and quaternary ammonium salts. Preferred alkali metal salts are lithium salts, sodium salts and potassium salts. Specific examples include: (1) lithium salts such as lithium tetrafluoroborate, lithium hexafluorophosphate, lithium perchlorate, lithium trifluoromethanesulfonate, the sulfonyl imide lithium salts of general formula (6) below, the sulfonyl methide lithium salts of general formula (7) below, lithium acetate, lithium trifluoroacetate, lithium benzoate, lithium p-toluenesulfonate, lithium nitrate, lithium bromide, lithium iodide and lithium tetraphenylborate;

(2) sodium salts such as sodium perchlorate, sodium iodide, sodium tetrafluoroborate, sodium hexafluorophosphate, sodium trifluoromethanesulfonate and sodium bromide; and

(3) potassium salts such as potassium iodide, potassium tetrafluoroborate, potassium hexafluorophosphate and potassium trifluoromethanesulfonate.

$$(R^8\text{-}SO_2)(R^9\text{-}SO_2)NLi \quad (6)$$

$$(R^{10}\text{-}SO_2)(R^{11}\text{-}SO_2)(R^{12}\text{-}SO_2)CLi \quad (7)$$

In above formulas (6) and (7), $R^8$ to $R^{12}$ are each independently $C_{1-4}$ perfluoroalkyl groups which may have

one or two ether linkages.

Illustrative examples of the sulfonyl imide lithium salts of general formula (6) include $(CF_3SO_2)_2NLi$, $(C_2F_5SO_2)_2NLi$, $(C_3F_7SO_2)_2NLi$, $(C_4F_9SO_2)_2NLi$, $(CF_3SO_2)(C_2F_5SO_2)NLi$, $(CF_3SO_2)(C_3F_7SO_2)NLi$, $(CF_3SO_2)(C_4F_9SO_2)NLi$, $(C_2F_5SO_2)(C_3F_7SO_2)NLi$, $(C_2F_5SO_2)(C_4F_9SO_2)NLi$ and $(CF_3OCF_2SO_2)_2NLi$.

Illustrative examples of the sulfonyl methide lithium salts of general formula (7) include $(CF_3SO_2)_3CLi$, $(C_2F_5SO_2)_3CLi$, $(C_3F_7SO_2)_3CLi$, $(C_4F_9SO_2)_3CLi$, $(CF_3SO_2)_2(C_2F_5SO_2)CLi$, $(CF_3SO_2)_2(C_3F_7SO_2)CLi$, $(CF_3SO_2)_2(C_4F_9SO_2)CLi$, $(CF_3SO_2)(C_2F_5SO_2)_2CLi$, $(CF_3SO_2)(C_3F_7SO_2)_2CLi$, $(CF_3SO_2)(C_4F_9SO_2)_2CLi$, $(C_2F_5SO_2)_2(C_3F_7SO_2)CLi$, $(C_2F_5SO_2)_2(C_4F_9SO_2)CLi$ and $(CF_3OCF_2SO_2)_3CLi$.

Illustrative examples of quaternary ammonium salts for electrical double-layer capacitors include tetramethylammonium hexafluorophosphate, tetraethylammonium hexafluorophosphate, tetrapropylammonium hexafluorophosphate, triethylmethylammonium hexafluorophosphate, triethylmethylammonium tetrafluoroborate, tetraethylammonium tetrafluoroborate and tetraethylammonium perchlorate. Other quaternary salts that may be used include acyclic amidines, cyclic amidines (e.g., imidazoles, imidazolines, pyrimidines, 1,5-diazabicyclo[4.3.0]non-5-ene (DBN), 1,8-diazabicyclo[5.4.0]undec-7-ene (DBU)), pyrroles, pyrazoles, oxazoles, thiazoles, oxadiazoles, thiadiazoles, triazoles, pyridines, pyrazines, triazines, pyrrolidines, morpholines, piperidines and piperazines.

Of the above, lithium tetrafluoroborate, triethylmethylammonium tetrafluoroborate, lithium hexafluorophosphate, sulfonyl imide lithium salts of general formula (6) and sulfonyl methide lithium salts of general formula (7) are preferred as electrolyte salts in lithium cells because of their particularly high ionic conductivity and excellent thermal stability. These ion-conductive salts may be used singly or as combinations of two or more thereof.

The concentration of the ion-conductive salt in the polymer gel electrolyte-forming composition is generally 0.05 to 3 mol/L, and preferably 0.1 to 2 mol/L. Too low a concentration may make it impossible to obtain a sufficient ionic conductivity. On the other hand, if the concentration is too high, the salt may not dissolve completely in the polymer gel electrolyte-forming composition.

Examples of the organic electrolyte include cyclic and acyclic carbonates, acyclic carboxylates, cyclic and acyclic ethers, phosphates, lactone compounds, nitrile compounds and amide compounds, as well as mixtures thereof.

Examples of suitable cyclic carbonates include alkylene carbonates such as propylene carbonate (PC), ethylene carbonate (EC) and butylene carbonate. Examples of suitable acyclic carbonates include dialkyl carbonates such as dimethyl carbonate (DMC), methyl ethyl carbonate (MEC) and diethyl carbonate (DEC). Examples of suitable acyclic carboxylates include methyl acetate and methyl propionate. Examples of suitable cyclic and acyclic ethers include tetrahydrofuran, 1,3-dioxolane and 1,2-dimethoxyethane. Examples of suitable phosphates include trimethyl phosphate, triethyl phosphate, ethyldimethyl phosphate, diethylmethyl phosphate, tripropyl phosphate, tributyl phosphate, tri(trifluoromethyl) phosphate, tri(trichloromethyl) phosphate, tri(trifluoroethyl) phosphate, tri(triperfluoroethyl) phosphate, 2-ethoxy-1,3,2-dioxaphosphoran-2-one, 2-trifluoroethoxy-1,3,2-dioxaphosphoran-2-one and 2-methoxyethoxy-1,3,2-dioxaphosphoran-2-one. An example of a suitable lactone compound is $\gamma$-butyrolactone. An example of a suitable nitrile compound is acetonitrile. An example of a suitable amide compound is dimethylformamide. Of these, cyclic carbonates, acyclic carbonates, phosphates and mixtures thereof are preferred because they provide a good battery performance such as high charge/discharge characteristics and high output characteristics.

A polymer gel electrolyte can be obtained by gelating the above-described polymer gel electrolyte-forming composition.

Here, if a compound having at least two reactive double bonds on the molecule is used as the reactive double bond-bearing compound in the pregel composition, this compound reacts to form a three-dimensional network structure, thereby giving an electrolyte having an excellent shape-retaining ability and physical strength.

Moreover, because a linear polymeric compound is also included, there can be obtained a gel having a semi-interpenetrating polymer network (semi-IPN) structure in which the molecular chains of the linear polymeric compound are intertwined with the three-dimensional network structure of the polymer formed by crosslinkage of the reactive double bond-bearing compound. The gel thus has a further improved shape retention and strength, and also has excellent adhesion and ionic conductivity.

That is, the gel has a three-dimensional crosslinked network (semi-IPN) structure arrived at by heating or exposing to radiation (e.g., UV light, electron beams, x-rays, gamma rays, microwaves, radio-frequency radiation) the composition formulated from the above-described pregel composition, ion-conductive salt and organic electrolyte so as to cause the crosslinkable functional group-bearing compound to react or polymerize and form a three-dimensional network structure intertwined with the molecular chains of the straight-chain or branched linear polymeric compound.

The polymerization reaction conditions are not subject to any particular limitation and may be suitably selected as appropriate for the polymerization process and the specific makeup of the composition used. For example, in the case of thermal polymerization, the reaction may be carried out at 50 to 120°C for a period of 0.5 to 6 hours.

The above polymerization reaction is preferably a radical polymerization reaction. A polymerization initiator (catalyst) is generally added when the polymerization reaction is carried out, although no such initiator is needed when electron beam irradiation is used.

No particular limitation is imposed on the polymerization initiator (catalyst). Any of various known polymerization initiators may be used, including photopolymerization initiators such as acetophenone, trichloroacetophenone, 2-hydroxy-2-methylpropiophenone, 2-hydroxy-2-methylisopropiophenone, 1-hydroxycyclohexyl ketone, benzoin ether, 2,2-diethoxyacetophenone and benzyl dimethyl ketal; high-temperature thermal polymerization initiators such as cumene hydroperoxide, t-butyl hydroperoxide, dicumyl peroxide and di-t-butyl peroxide; conventional thermal polymerization initiators such as benzoyl peroxide, lauroyl peroxide, persulfates, 2,2'-azobis(2,4-dimethylvaleronitrile), 2,2'-azobis(4-methoxy-2,4-dimethylvaleronitrile) and 2,2'-azobisisobutyronitrile; low-temperature thermal polymerization initiators (redox initiators) such as hydrogen peroxide-ferrous salts, persulfate-acidic sodium sulfite, cumene hydroperoxide-ferrous salts and benzoyl peroxide-dimethylaniline; and also peroxide-organometallic alkyls, triethylboron, diethylzinc, and oxygen-organometallic alkyls.

These initiators may be used alone or as a mixture of two or more thereof. The initiator is typically added in an amount of 0.1 to 1 part by weight, and preferably 0.1 to 0.5 part by weight, per 100 parts by weight of the reactive double bond-bearing compound. The addition of less than 0.1 part by weight may result in a considerable decline in the polymerization rate. On the other hand, the addition of more than 1 part by weight increases the number of reaction initiation sites and may result in the formation of a low-molecular-weight compound.

When the polymer gel electrolyte-forming composition is introduced into a cell assembly or an electrical double-layer capacitor assembly, it is preferable to use a method in which the cell or capacitor assembly is heated to at least 40° C, preferably at least 50° C, and most preferably at least 70° C, and the polymer gel electrolyte-forming composition is subsequently impregnated into the heated assembly.

By heating the cell or capacitor assembly to at least 40° C, the ability of the polymer gel electrolyte-forming composition to penetrate into the cell or capacitor assembly can be increased. The temperature of the polymer gel electrolyte-forming composition introduced into the assembly, although not subject to any particular limitation, is preferably lower than the temperature of the heated assembly. Penetration by the polymer gel electrolyte-forming composition can be further improved in this way.

If a polymer gel electrolyte-forming composition which gels under heating is used here, it is essential that the temperature to which the cell or capacitor assembly is heated be of a degree at which the polymerization reaction by the composition does not proceed.

When the cell assembly is heated to at least 40°C and a polymer gel electrolyte-forming composition is introduced therein, the polymer gel electrolyte-forming composition is not limited to ones which include the above-described pregel composition. Even with the use of other types of polymer gel electrolyte-forming compositions, heating of the cell assembly enables a higher rate of penetration to be achieved than in the absence of heating.

In the latter case as well, to achieve more rapid and uniform penetration of the polymer gel electrolyte-forming composition into the cell or capacitor assembly, it is preferable for the temperature of the composition to be lower than the temperature of the heated assembly.

The inventive method of introducing a nonaqueous electrolyte solution is characterized by heating an electrical double-layer capacitor assembly or a cell assembly composed of a positive electrode, a negative electrode and a separator to at least 40°C, then impregnating the nonaqueous electrolyte solution into the assembly.

As with the above-described polymer gel electrolyte-forming composition, the nonaqueous electrolyte solution can in this way be made to penetrate into the cell or capacitor assembly more easily than if the assembly is not heated.

The temperature of the nonaqueous electrolyte solution, although not subject to any particular limitation, is preferably lower than the temperature of the heated assembly. In this way, the nonaqueous electrolyte solution can be made to more rapidly and uniformly penetrate the cell or capacitor assembly.

The nonaqueous electrolyte solution is not subject to any particular limitation, provided it can be generally used as a nonaqueous electrolyte solution. However, the use of a nonaqueous electrolyte solution which includes (A) 0.01 to 7 wt% of at least one compound selected from Compound Group (A) below, (B) an ion-conductive salt, and (C) an organic electrolyte is preferred.

(A) maleic anhydride and derivatives thereof (A1)
N-methylmaleimide and derivatives thereof (A2)
N-vinylpyrrolidone and derivatives thereof (A3)
tetrahydrofurfuryl (meth)acrylate and derivatives thereof (A4)
vinyloxazoline and derivatives thereof (A5)
propanesultone, butanesultone and derivatives thereof (A6)
vinylene carbonate and derivatives thereof (A7)
N-vinylcaprolactam and derivatives thereof (A8)
2-vinyl-1,3-dioxolane and derivatives thereof (A9)
vinylethylene carbonate and derivatives thereof (A10)
butadienesulfone (A11)

fluoroethylene carbonate (A12)
ethylene sulfite and derivatives thereof (A13)

Compounds A1 to A13 in Compound Group (A) are believed to form what is known as a solid electrolyte interphase (SEI) film on the active materials of secondary cells, particularly the negative electrode active material, due to the electrochemical reactions associated with charging and discharging. The negative electrode surface is inactivated by the SEI film that has formed, enabling decomposition of the organic electrolyte solvent at the negative electrode to be suppressed and thus making it possible to improve the cycle properties and low-temperature properties of the secondary cell.
If the overall content of compounds selected from Compound Group (A) is less than 0.01 wt%, the addition of these compounds has an inadequate effect (i.e., formation of an SEI film on the negative electrode active material), making it impossible to suppress the decomposition of nonaqueous solvents such as propylene carbonate-based solvents at the negative electrode. On the other hand, at a content of more than 7 wt%, the low temperature characteristic of the cell decreases. An overall content of 0.05 to 5 wt%, and especially 0.1 to 3 wt%, is preferred.
The ion-conductive salt and the organic electrolyte are the same as described above.
Next, the cell assembly and the electrical double-layer capacitor assembly are described.

Cell Assembly

The cell assembly used in the invention is composed of a positive electrode, a negative electrode and a separator.
The positive electrode may be one produced by coating one or both sides of a positive electrode current collector with a positive electrode binder composition composed primarily of a binder polymer and a positive electrode active material. The positive electrode may also be formed by melting and blending a positive electrode binder composition composed primarily of a binder polymer and a positive electrode active material, then extruding the composition as a film.
The binder resin may be the matrix polymer used in the above-described polymer gel electrolyte, or another binder resin commonly employed as an electrode binder resin in secondary cells. Having the binder resin be the same polymeric material as the matrix polymer in the polymer gel electrolyte is particularly desirable for lowering the internal resistance of the cell.
The positive electrode current collector may be made of a suitable material such as stainless steel, aluminum, titanium, tantalum or nickel. Of these, aluminum is especially preferred both in terms of performance and cost. This current collector may be used in any of various forms, including foil, expanded metal, sheet, foam, wool, or a three-dimensional structure such as a net.
The positive electrode active material is selected as appropriate for the intended use of the electrode, the type of battery and other considerations. Examples of positive electrode active materials that are suitable for use in the positive electrode of a lithium secondary cell include group I metal compounds such as CuO, $Cu_2O$, $Ag_2O$, CuS and $CuSO_2$; group IV metal compounds such as TiS, $SiO_2$ and SnO; group V metal compounds such as $V_2O_5$, $V_6O_{13}$, $VO_x$, $Nb_2O_5$, $Bi_2O_3$ and $Sb_2O_3$; group VI metal compounds such as $CrO_3$, $Cr_2O_3$, $MoO_3$, $MoS_2$, $WO_3$ and $SeO_2$; group VII metal compounds such as $MnO_2$ and $Mn_2O_4$; group VIII metal compounds such as $Fe_2O_3$, FeO, $Fe_3O_4$, $Ni_2O_3$, NiO and $CoO_2$; and electrically conductive polymeric compounds such as polypyrrole, polyaniline, poly(p-phenylene), polyacetylene and polyacene.
Positive electrode active materials that may be used in lithium ion secondary cells include chalcogen compounds capable of lithium ion insertion and extraction, or lithium ion-containing chalcogen compounds.
Examples of chalcogen compounds capable of lithium ion insertion and extraction include $FeS_2$, $TiS_2$, $MoS_2$, $V_2O_5$, $V_6O_{13}$ and $MnO_2$.
Specific examples of lithium ion-containing chalcogen compounds include $LiCoO_2$, $LiMnO_2$, $LiMn_2O_4$, $LiMo_2O_4$, $LiV_3O_8$, $LiNiO_2$ and $Li_xNi_yM_{1-y}O_2$ (wherein M is one or more metal element selected from among cobalt, manganese, titanium, chromium, vanadium, aluminum, tin, lead and zinc; $0.05 \leq x \leq 1.10$; and $0.5 \leq y \leq 1.0$).
In addition to the binder resin and the positive electrode active material described above, if necessary, the binder composition for the positive electrode may include also an electrically conductive material. Illustrative examples of the conductive material include carbon black, Ketjenblack, acetylene black, carbon whiskers, carbon fibers, natural graphite and artificial graphite.
The positive electrode binder composition typically includes 1,000 to 5,000 parts by weight, and preferably 1,200 to 3,500 parts by weight, of the positive electrode active material and 20 to 500 parts by weight, and preferably 50 to 400 parts by weight, of the conductive material per 100 parts by weight of the binder resin.
The negative electrode is produced by coating one or both sides of a negative electrode current collector with a negative electrode binder composition composed primarily of a binder polymer and a negative electrode active material. The same binder polymer may be used as in the positive electrode. Alternatively, the negative electrode binder composition composed primarily of a binder polymer and a negative electrode active material may be melted and blended, then extruded as a film to form the negative electrode.

The negative electrode current collector may be made of a suitable material such as copper, stainless steel, titanium or nickel. Of these, copper is especially preferred both in terms of performance and cost. The current collector used may be in any of various forms, including foil, expanded metal, sheet, foam, wool, or a three-dimensional structure such as a net.

The negative electrode active material is selected as appropriate for the intended use of the electrode, the type of battery and other considerations. Examples of negative electrode active materials that are suitable for use in the negative electrode of a lithium secondary cell include alkali metals, alkali metal alloys, carbonaceous materials, and the same materials as those mentioned above for the positive electrode active material.

Examples of suitable alkali metals include lithium, sodium and potassium. Examples of suitable alkali metal alloys include metallic lithium, Li-Al, Li-Mg, Li-Al-Ni, sodium, Na-Hg and Na-Zn.

Examples of suitable carbonaceous materials include graphite, carbon black, coke, glassy carbon, carbon fibers, and sintered bodies obtained from any of these.

In a lithium ion secondary cell, use may be made of a material capable of the reversible insertion and extraction of lithium ions. The material capable of the reversible insertion and extraction of lithium ions may be a carbonaceous material such as a non-graphitizable carbonaceous material or a graphite material. Specific examples of carbonaceous materials that may be used include pyrolytic carbon, cokes (e.g., pitch coke, needle coke, petroleum coke), graphites, glassy carbons, fired organic polymeric materials (materials such as phenolic resins or furan resins that have been carbonized by firing at a suitable temperature), carbon fibers, and activated carbon. Use can also be made of other materials capable of the reversible insertion and extraction of lithium ions, including polymers such as polyacetylene and polypyrrole, and oxides such as $SnO_2$.

In addition to the binder resin and the negative electrode active material, if necessary, the binder composition for the negative electrode may include also a conductive material. Illustrative examples of the conductive material include the same as those mentioned above for the positive electrode binder.

The negative electrode binder composition typically includes 500 to 1,700 parts by weight, and preferably 700 to 1,300 parts by weight, of the negative electrode active material and 0 to 70 parts by weight, and preferably 0 to 40 parts by weight, of the conductive material per 100 parts by weight of the binder resin.

The above-described negative electrode binder composition and positive electrode binder composition are generally used together with a dispersing medium, in the form of a paste. Suitable dispersing media include polar solvents such as N-methyl-2-pyrrolidone (NMP), dimethylformamide, dimethylacetamide and dimethylsulfonamide. The dispersing medium is typically added in an amount of about 30 to 300 parts by weight per 100 parts by weight of the positive electrode or negative electrode binder composition.

No particular limitation is imposed on the method for shaping the positive electrode and the negative electrode as thin films, although it is preferable in each case to apply the composition by a suitable means such as roller coating with an applicator roll, screen coating, doctor blade coating, spin coating or bar coating so as to form an active material layer having a uniform thickness when dry of 10 to 200 μm, and especially 50 to 150 μm.

The separator disposed between the resulting positive and negative electrodes is preferably (1) a separator prepared by impregnating a separator base with the above-described nonaqueous electrolyte solution, or (2) a separator prepared by impregnating the separator base with the above-described polymer gel electrolyte-forming composition then carrying out a reaction to effect curing.

The separator base may be one that is commonly used in electrical double-layer capacitors. Illustrative examples include polyethylene nonwoven fabric, polypropylene nonwoven fabric, polyester nonwoven fabric, polytetrafluoroethylene porous film, kraft paper, sheet laid from a blend of rayon fibers and sisal hemp fibers, manila hemp sheet, glass fiber sheet, cellulose-based electrolytic paper, paper made from rayon fibers, paper made from a blend of cellulose and glass fibers, and combinations thereof in the form of multilayer sheets.

A secondary cell can be assembled by stacking, fan-folding or winding a cell assembly composed of the above-described positive electrode and negative electrode with a separator therebetween. The cell assembly is then formed into a laminate or a coin-like shape, and placed within a cell housing such as a can or a laminate pack. The housing is then mechanically sealed if it is a can or heat-sealed if it is a laminate pack. At this time, the cell assembly composed of positive and negative electrodes with a separator base positioned therebetween is placed in the cell housing and heated to at least 40°C, following which the assembly is filled with the above-described polymer gel electrolyte-forming composition so that the composition thoroughly penetrates between the electrodes and into gaps between the separator and the electrodes, and is subsequently reacted to effect curing.

The resulting secondary cell can be operated at a high capacity and a high current without compromising its outstanding characteristics, including an excellent charge/discharge efficiency, high energy density, high output density and long cycle life. Such cells have a broad operating temperature range, and can be effectively used as lithium secondary cells and lithium ion secondary cells.

These secondary cells are well-suited for use in a variety of applications, including main power supplies and memory backup power supplies for portable electronic equipment such as video cameras, notebook computers, cell phones and "personal handyphone systems" (PHS), uninterruptible power supplies for equipment such as personal computers, in electric cars and hybrid cars, and together with solar cells as energy storage systems for solar power generation.

Electrical Double-Layer Capacitor Assembly

The electrical double-layer capacitor assembly used in the invention is composed of a separator sandwiched between a pair of polarizable electrodes, each of which is made of a positive or negative electrode current collector coated with a polarizable electrode composition.

Any positive and negative electrode current collectors commonly used in electrical double-layer capacitors may be selected and used for this purpose. The positive electrode current collector is preferably aluminum oxide foil. In capacitors which use lithium salts, the positive electrode current collector is preferably aluminum foil or aluminum oxide and the negative electrode current collector is preferably copper foil, nickel foil, or a metal foil covered on the surface thereof with a copper plating film.

The polarizable electrodes may be ones produced by coating a current collector with a polarizable electrode composition containing a carbonaceous material and a binder resin.

The polarizable electrodes may also be formed by melting and blending a polarizable electrode binder composition composed primarily of a binder polymer and an activated carbon, then extruding the composition as a film.

The binder resin may be the matrix polymer used in the above-described polymer gel electrolyte, or another binder resin commonly employed as an electrode binder resin in electrical double-layer capacitors. Having the binder resin be the same polymeric material as the matrix polymer in the polymer gel electrolyte is particularly desirable for lowering the internal resistance of the capacitor.

The carbonaceous material is not subject to any particular limitation. Illustrative examples include carbonaceous materials prepared by the carbonization of a suitable starting material, or by both carbonization and subsequent activation of the carbonized material to yield activated carbon. Examples of suitable starting materials include plant-based materials such as wood, sawdust, coconut shells and pulp spent liquor; fossil fuel-based materials such as coal and petroleum fuel oil, as well as fibers spun from coal or petroleum pitch obtained by the thermal cracking of such fossil fuel-based materials or from tar pitch; and synthetic polymers, phenolic resins, furan resins, polyvinyl chloride resins, polyvinylidene chloride resins, polyimide resins, polyamide resins, liquid-crystal polymers, plastic waste and reclaimed tire rubber. Activated carbons prepared by chemical activation using potassium hydroxide are especially preferred because they tend to provide a larger capacitance than steam-activated product.

The activated carbon used in the practice of the invention may be in any of various forms, including shredded material, granulated material, pellets, fibers, felt, woven fabric or sheet.

The amount of activated carbon included is 500 to 10,000 parts by weight, and preferably 1,000 to 4,000 parts by weight, per 100 parts by weight of the binder resin. The addition of too much activated carbon may lower the bonding strength of the binder composition for the polarizable electrodes, resulting in poor adhesion to the current collector. On the other hand, too little activated carbon may have the effect of increasing the electrical resistance and lowering the electrostatic capacitance of the polarizable electrodes produced with the composition.

A conductive material may be added to the above-described carbonaceous material. The conductive material may be any suitable material capable of conferring electrical conductivity to the carbonaceous material. Illustrative, non-limiting, examples include carbon black, Ketjenblack, acetylene black, carbon whiskers, carbon fibers, natural graphite, artificial graphite, titanium oxide, ruthenium oxide, and metallic fibers such as those made of aluminum and nickel. Any one or combinations of two or more thereof may be used. Of these, Ketjenblack and acetylene black, which are both types of carbon black, are preferred.

The average particle size of the conductive material, though not subject to any particular limitation, is preferably 10 nm to 10 μm, more preferably 10 to 100 nm, and even more preferably 20 to 40 nm. It is especially advantageous for the conductive material to have an average particle size which is from 1/5000 to 1/2, and preferably from 1/1000 to 1/10, the average particle size of the carbonaceous material.

The amount of conductive material added is not subject to any particular limitation, although an amount of from 0.1 to 20 parts by weight, and preferably 0.5 to 10 parts by weight, per 100 parts by weight of the carbonaceous material is desirable for achieving a good capacitance and imparting electrical conductivity.

The binder composition for polarizable electrodes is generally used together with a diluting solvent, in the form of a paste. Suitable diluting solvents include N-methyl-2-pyrrolidone, acetonitrile, tetrahydrofuran, acetone, methyl ethyl ketone, 1,4-dioxane and ethylene glycol dimethyl ether. The diluting solvent is typically added in an amount of about 30 to 300 parts by weight per 100 parts by weight of the polarizable electrode binder composition.

The above-described polarizable electrode composition is coated onto a current conductor to form the polarizable electrodes. Any positive and negative electrode current collectors commonly used in electrical double-layer capacitors may be selected and used for this purpose. The positive electrode current collector is preferably aluminum foil or aluminum oxide, and the negative electrode current collector is preferably aluminum foil, aluminum oxide foil, copper foil, nickel foil, or a metal foil covered on the surface thereof with a copper plating film.

The foils making up the respective current collectors may be in any of various shapes, including thin foils, flat sheets, and perforated, stampable sheets. The foil has a thickness of generally about 1 to 200 μm. Taking into account such characteristics as the density of the carbonaceous material as a portion of the overall electrode and the electrode strength, a thickness of 8 to 100 μm, and especially 8 to 40 μm, is preferred.

Alternatively, the polarizable electrodes can be produced by melting and blending the polarizable electrode composition, then extruding the blend as a film.

No particular limitation is imposed on the method for shaping the polarizable electrodes as thin films, although it is preferable to apply the composition by a suitable means such as roller coating with an applicator roll, screen coating, doctor blade coating, spin coating or bar coating so as to form an activated carbon layer having a uniform thickness when dry of 10 to 500 μm, and especially 50 to 400 μm.

The separator disposed between the pair of polarizable electrodes is (1) a separator prepared by impregnating a separator base with the above-described nonaqueous electrolyte solution, or (2) a separator prepared by impregnating the separator base with the above-described polymer gel electrolyte-forming composition then carrying out a reaction to effect curing.

The separator base may be one that is commonly used in electrical double-layer capacitors. Illustrative examples include polyethylene nonwoven fabric, polypropylene nonwoven fabric, polyester nonwoven fabric, polytetrafluoroethylene porous film, kraft paper, sheet laid from a blend of rayon fibers and sisal hemp fibers, manila hemp sheet, glass fiber sheet, cellulose-based electrolytic paper, paper made from rayon fibers, paper made from a blend of cellulose and glass fibers, and combinations thereof in the form of multilayer sheets.

The electrical double-layer capacitor can be assembled by stacking, fan-folding or winding an electrical double-layer capacitor assembly composed of the above-described pair of polarizable electrodes with a separator therebetween. The capacitor assembly is then formed into a laminate or a coin-like shape, and placed within a capacitor housing such as a can or a laminate pack. The housing is mechanically sealed if it is a can or heat-sealed if it is a laminate pack.

At this time, the electrical double-layer capacitor assembly composed of a pair of polarizable electrodes with a separator base positioned therebetween is placed in the capacitor housing and heated to at least 40°C, following which the assembly is filled with the above-described polymer gel electrolyte-forming composition so that the composition thoroughly penetrates between the electrodes and into gaps between the separator and the electrodes, and is subsequently reacted to effect curing.

The resulting electrical double-layer capacitor has an outstanding performance, including a high output voltage, a large output current and a broad service temperature range, without compromising such desirable characteristics as an excellent charge/discharge efficiency, a high energy density, a high output density and a long life.

Such electrical double-layer capacitors are thus highly suitable for use in a broad range of applications, including memory backup power supplies for electronic equipment such as personal computers and wireless terminals, uninterruptible power supplies for personal computers and the like, in transport equipment such as electric cars and hybrid cars, together with solar cells as energy storage systems for solar power generation, and in combination with batteries as load-leveling power supplies.

## EXAMPLE

The following synthesis examples, examples of the invention and comparative examples are provided to illustrate the invention and do not in any way limit the invention.

### Synthesis Example 1

Synthesis of Polyvinyl Alcohol Derivative

A reaction vessel equipped with a stirring element was charged with 3 parts by weight of polyvinyl alcohol (average degree of polymerization, 1,500; vinyl alcohol fraction, ≥98%), 20 parts by weight of 1,4-dioxane and 14 parts by weight of acrylonitrile. A solution of 0.16 part by weight of sodium hydroxide in 1 part by weight of water was gradually added under stirring, after which stirring was continued for 10 hours at 25°C.

The resulting mixture was neutralized using an ion-exchange resin (produced by Organo Corporation under the trade name Amberlite IRC-76). The ion-exchange resin was then separated off by filtration, after which 50 parts

by weight of acetone was added to the solution and the insolubles were filtered off. The resulting acetone solution was placed in dialysis membrane tubing and dialyzed with running water. The polymer which precipitated within the dialysis membrane tubing was collected and re-dissolved in acetone. The resulting solution was filtered, following which the acetone was evaporated off, giving a cyanoethylated polyvinyl alcohol polymer derivative.

The infrared absorption spectrum of the resulting polymeric compound (polymer derivative) showed no hydroxyl group absorption, confirming that all the hydroxyl groups were capped with cyanoethyl groups (capping ratio, 100%).

Synthesis Example 2

Synthesis of Thermoplastic Polyurethane Resin

A reactor equipped with a stirrer, a thermometer and a condenser was charged with 64.34 parts by weight of preheated and dehydrated polycaprolactone diol (Praccel 220N, made by Daicel Chemical Industries, Ltd.) and 28.57 parts by weight of 4,4'-diphenylmethane diisocyanate. The reactor contents were stirred and mixed for 2 hours at 120°C under a stream of nitrogen, following which 7.09 parts by weight of 1,4-butanediol was added to the mixture and the reaction was similarly effected at 120°C under a stream of nitrogen. When the reaction reached the point where the reaction product became rubbery, it was stopped. The reaction product was then removed from the reactor and heated at 100°C for 12 hours. Once the isocyanate group absorption peak was confirmed to have disappeared from the infrared absorption spectrum, heating was stopped, yielding a solid polyurethane resin.

The resulting polyurethane resin had a weight-average molecular weight (Mw) of $1.71 \times 10^5$. A polyurethane resin solution was prepared by dissolving 8 parts by weight of this polyurethane resin in 92 parts by weight of N-methyl-2-pyrrolidone.

Example 1

Lithium Ion Secondary Cell

Preparation of Nonaqueous Electrolyte Solution

A mixture of propylene carbonate (PC), ethylene carbonate (EC) and diethyl carbonate (DEC) was prepared in a weight ratio of 10:35:55, following which 1 part by weight of tetrahydrofurfuryl methacrylate was added. $LiPF_6$ was then dissolved therein to a concentration of 1 M to form a nonaqueous electrolyte solution.

Fabrication of Positive Electrode

A paste-like positive electrode binder composition was prepared by stirring and mixing together 92 parts by weight of $LiCoO_2$ as the positive electrode active material, 4 parts by weight of Ketjenblack as the conductive material, 2.5 parts by weight of the polyurethane resin solution obtained in Synthesis Example 2, 38 parts by weight of a solution of 10 parts by weight of polyvinylidene fluoride (PVDF) in 90 parts by weight of N-methyl-2-pyrrolidone, and 18 parts by weight of N-methyl-2-pyrrolidone. The positive electrode binder composition was applied onto aluminum foil with a doctor blade to a dry film thickness of 100 μm. This was followed by 2 hours of drying at 80°C, then roll pressing to a thickness of 80 μm, thereby giving a positive electrode. The terminal lead attachment portion of the electrode was left uncoated with the positive electrode composition.

Fabrication of Negative Electrode

A paste-like negative electrode binder composition was prepared by stirring and mixing together 92 parts by weight of mesophase microbeads (MCMB6-28, made by Osaka Gas Chemicals Co., Ltd.) as the negative electrode active material, 80 parts by weight of a solution of 10 parts by weight of polyvinylidene fluoride in 90 parts by weight of N-methyl-2-pyrrolidone, and 40 parts by weight of N-methyl-2-pyrrolidone. The negative electrode binder composition was applied onto copper foil with a doctor blade to a dry film thickness of 100 μm. This was followed by 2 hours of drying at 80°C, then roll pressing to a thickness of 80 μm, thereby giving a negative electrode. The terminal lead attachment portion of the electrode was left uncoated with the negative electrode composition.

Fabrication of Cell

At the lead attachment portions of the positive and negative electrode current collectors fabricated as described above, an aluminum terminal lead was attached to the positive electrode and a nickel terminal lead was attached to the negative electrode. The positive and negative electrodes were then vacuum dried at 140°C for 12 hours. A polyolefin nonwoven fabric separator was placed between the dried positive and negative electrodes, and the resulting laminate was coiled to form a flattened electrode body. The electrode body was placed in an aluminum laminate case with the positive electrode and negative electrode terminal leads emerging respectively from the positive and negative electrodes, and the terminal areas were heat-sealed, thereby forming a cell assembly. This cell assembly was heated to and held at 80°C. The nonaqueous electrolyte solution prepared as described above was poured into the cell assembly being held at 80°C and impregnated under a vacuum, following which the aluminum laminate case was heat-sealed, giving a laminated nonaqueous secondary cell having a design capacity of 300 mAh.

Example 2

Lithium Ion Gel Secondary Cell

Preparation of Nonaqueous Electrolyte Solution

One part by weight of tetrahydrofurfuryl methacrylate was added to an organic electrolyte obtained by mixing propylene carbonate (PC), ethylene carbonate (EC) and diethyl carbonate (DEC) in a weight ratio of 10:35:55. $LiPF_6$ was then dissolved therein to a concentration of 1 M to form a nonaqueous electrolyte solution.

Preparation of Polymer Gel Electrolyte-Forming Composition

The following dehydration-treated components were mixed in the indicated amounts: 100 parts by weight of polyethylene glycol dimethacrylate (number of oxirene units, 9), 70.15 parts by weight of methoxypolyethylene glycol monomethacrylate (number of oxirene units, 2), and 8.41 parts by weight of trimethylolpropane trimethacrylate. Next, 0.5 part by weight of the polyvinyl alcohol derivative obtained in Synthesis Example 1 was added to 100 parts by weight of the mixture, yielding a pregel composition.

Seven parts by weight of the resulting pregel composition, 93 parts by weight of the above-described nonaqueous electrolyte solution, and 0.05 part by weight of azobisisobutyronitrile were added together to give a polymer gel electrolyte-forming composition.

Fabrication of Positive Electrode

A paste-like positive electrode binder composition was prepared by stirring and mixing together 92 parts by weight of $LiCoO_2$ as the positive electrode active material, 4 parts by weight of Ketjenblack as the conductive material, 2.5 parts by weight of the polyurethane resin solution obtained in Synthesis Example 2, 38 parts by weight of a solution of 10 parts by weight of polyvinylidene fluoride (PVDF) in 90 parts by weight of N-methyl-2-pyrrolidone, and 18 parts by weight of N-methyl-2-pyrrolidone. The positive electrode binder composition was applied onto aluminum foil with a doctor blade to a dry film thickness of 100 µm. This was followed by 2 hours of drying at 80°C, then roll pressing to a thickness of 80 µm, thereby giving a positive electrode. The terminal lead attachment portion of the electrode was left uncoated with the negative electrode composition.

Fabrication of Negative Electrode

A paste-like negative electrode binder composition was prepared by stirring and mixing together 92 parts by weight of mesophase microbeads (MCMB6-28, made by Osaka Gas Chemicals Co., Ltd.) as the negative electrode active material, 80 parts by weight of a solution of 10 parts by weight of polyvinylidene fluoride in 90 parts by weight of N-methyl-2-pyrrolidone, and 40 parts by weight of N-methyl-2-pyrrolidone. The negative electrode binder composition was applied onto copper foil with a doctor blade to a dry film thickness of 100 µm. This was followed by 2 hours of drying at 80°C, then roll pressing to a thickness of 80 µm, thereby giving a negative electrode. The terminal lead attachment portion of the electrode was left uncoated with the negative electrode composition.

Fabrication of Cell

At the lead attachment portions of the positive and negative electrode current collectors fabricated as described above, an aluminum terminal lead was attached to the positive electrode and a nickel terminal lead was attached to the negative electrode. The positive and negative electrodes were then vacuum dried at 140°C for 12 hours. A polyolefin nonwoven fabric separator was placed between the dried positive and negative electrodes, and the resulting

laminate was coiled to form a flattened electrode body. The electrode body was placed in an aluminum laminate case with the positive electrode and negative electrode terminal leads emerging respectively from the positive and negative electrodes, and the terminal areas were heat-sealed, thereby forming a cell assembly. This cell assembly was heated to and held at 80°C. The polymer gel electrolyte-forming composition prepared as described above was poured into the cell assembly being held at 80°C and impregnated under a vacuum, following which the aluminum laminate case was heat-sealed. This was followed by 2 hours of heating at 55°C, then 0.5 hour of heating at 80°C to effect gelation of the polymer gel electrolyte-forming composition, thereby giving a laminated nonaqueous secondary cell having a design capacity of 300 mAh.

Examples 3 to 10

Aside from using, respectively, propanesultone (Example 3), N-methylmaleimide (Example 4), maleic anhydride (Example 5), vinyloxazoline (Example 6), N-vinylpyrrolidone (Example 7), vinylene carbonate (Example 8), fluoroethylene carbonate (Example 9) and ethylene sulfide (Example 10) instead of tetrahydrofurfuryl methacrylate, nonaqueous electrolyte solutions and polymer gel electrolyte-forming compositions were prepared in the same way as in Example 2. The resulting polymer gel electrolyte-forming compositions were used to fabricate secondary cells in the same way as in Example 2.

Example 11

Aside from using 0.5 part by weight of tetrahydrofurfuryl methacrylate and 0.5 part by weight of propanesultone instead of 1 part by weight of tetrahydrofurfuryl methacrylate, a nonaqueous electrolyte solution and a polymer gel electrolyte-forming composition were prepared in the same way as in Example 2. The resulting polymer gel electrolyte-forming composition was used to fabricate a secondary cell in the same way as in Example 2.

Example 12

Aside from using 0.5 part by weight of tetrahydrofurfuryl methacrylate and 0.5 part by weight of vinylene carbonate instead of 1 part by weight of tetrahydrofurfuryl methacrylate, a nonaqueous electrolyte solution and a polymer gel electrolyte-forming composition were prepared in the same way as in Example 2. The resulting polymer gel electrolyte-forming composition was used to fabricate a secondary cell in the same way as in Example 2.

Example 13

Aside from using the following positive electrode, a secondary cell was fabricated in the same way as in Example 2.

Fabrication of Positive Electrode

A paste-like positive electrode binder composition was prepared by stirring and mixing together 92 parts by weight of $LiCoO_2$ as the positive electrode active material, 4 parts by weight of Ketjenblack as the conductive material, 40 parts by weight of a solution of 10 parts by weight of polyvinylidene fluoride in 90 parts by weight of N-methyl-2-pyrrolidone, and 18 parts by weight of N-methyl-2-pyrrolidone. The positive electrode binder composition was applied onto aluminum foil with a doctor blade to a dry film thickness of 100 μm. This was followed by 2 hours of drying at 80°C, then roll pressing to a thickness of 80 μm, thereby giving a positive electrode. The terminal lead attachment portion of the electrode was left uncoated with the positive electrode composition.

Example 14

Aside from not warming the cell assembly to 80°C when the polymer gel electrolyte-forming composition was poured therein, a secondary cell was fabricated in the same way as in Example 2.

Comparative Example 1

Aside from using a polyethylene glycol dimethacrylate having 2 oxirene units instead of a polyethylene glycol dimethacrylate having 9 oxirene units, a nonaqueous electrolyte solution and a polymer gel electrolyte-forming composition were prepared in the same way as in Example 2. The resulting polymer gel electrolyte-forming composition was used to fabricate a secondary cell in the same way as in Example 2.

The viscosities of the pregel compositions prepared in each of the above examples of the invention and the comparative example were measured at 20°C using a Brookfield viscometer.

The following tests were carried out on the laminate-type secondary cells obtained in the above examples of the invention and the comparative example. The test results are given in Table 1.

[1] Low-Temperature Characteristic Test:

The secondary cells were subjected to a test in which the upper limit voltage during charging was set at 4.2 V and constant current, constant-voltage charging was carried out at a current of 150 mA. The secondary cells were also subjected to a test conducted at room temperature (25°C) or -20°C in which the cutoff voltage during discharging was set to 3 V and constant-current discharging was carried out at a current of 150 mA. Using the results thus obtained, the ratio of the discharge capacity at -20°C to the discharge capacity at 25°C was calculated as shown below, giving the low-temperature characteristic.

$$\text{Low-Temperature Characteristic (\%)} = [(\text{discharge capacity at -20°C})/(\text{discharge capacity at 25°C})] \times 100$$

[2] Cycle Characteristic Test

The secondary cells were subjected to a 100 charge/discharge cycle test, each cycle consisting of charging to an upper limit voltage of 4.2 V at a current of 150 mA, then constant-current charging at a current of 150 mA to a cutoff voltage during discharging of 3 V. Using the results thus obtained, the ratio of the cell capacity in the $100^{th}$ cycle to the cell capacity in the first cycle was calculated as shown below, giving the cycle maintenance ratio.

$$\text{Cycle Maintenance Ratio (\%)} = [(\text{discharge capacity in } 100^{th} \text{ cycle})/(\text{discharge capacity in first cycle})] \times 100$$

## Table 1

| | | Nonaqueous solvent (parts by weight) | | | Compound Group (A) | | Pregel composition viscosity (cP) | Low-temperature characteristic (%) | Cycle maintenance ratio (%) | Cell assembly heating temperature (°C) |
|---|---|---|---|---|---|---|---|---|---|---|
| | | PC | EC | DEC | Substance | Amount (pbw) | | | | |
| Example | 1 | 10 | 35 | 55 | Tetrahydrofurfuryl methacrylate | 1 | 16 (electrolyte viscosity) | 80 | 90 | 80 |
| | 2 | 10 | 35 | 55 | Tetrahydrofurfuryl methacrylate | 1 | 19 | 60 | 85 | 80 |
| | 3 | 10 | 35 | 55 | Propanesultone | 1 | 19 | 55 | 83 | 80 |
| | 4 | 10 | 35 | 55 | N-methylmaleimide | 1 | 18 | 50 | 82 | 80 |
| | 5 | 10 | 35 | 55 | Maleic anhydride | 1 | 20 | 57 | 87 | 80 |
| | 6 | 10 | 35 | 55 | Vinyl oxide | 1 | 21 | 53 | 84 | 80 |
| | 7 | 10 | 35 | 55 | N-Vinylpyrrolidone | 1 | 19 | 60 | 85 | 80 |
| | 8 | 10 | 35 | 55 | Vinylene carbonate | 1 | 18 | 58 | 89 | 80 |
| | 9 | 10 | 35 | 55 | Fluoroethylene carbonate | 1 | 20 | 56 | 84 | 80 |
| | 10 | 10 | 35 | 55 | Ethylene sulfite | 1 | 21 | 55 | 85 | 80 |
| | 11 | 10 | 35 | 55 | Tetrahydrofurfuryl methacrylate<br>Propanesultone | 0.5<br>0.5 | 18 | 64 | 88 | 80 |
| | 12 | 10 | 35 | 55 | Tetrahydrofurfuryl methacrylate<br>Vinylene carbonate | 0.5<br>0.5 | 20 | 62 | 87 | 80 |
| | 13 | 10 | 35 | 55 | Tetrahydrofurfuryl methacrylate | 1 | 19 | 52 | 85 | 80 |
| | 14 | 10 | 35 | 55 | Tetrahydrofurfuryl methacrylate | 1 | 19 | 56 | 63 | not heated |
| Comparative Example | 1 | 10 | 35 | 55 | Tetrahydrofurfuryl methacrylate | 1 | 122 | 46 | 54 | 80 |

As is apparent from Table 1, in Examples 1 to 13 of the invention, because a nonaqueous electrolyte solution or a polymer gel electrolyte-forming composition containing a pregel composition having a viscosity of less than 50 cP is used and because the composition is introduced into the cell assembly after the assembly has been heated to 80°C, the composition penetrates uniformly into the assembly, thereby giving a secondary cell having an excellent cycle maintenance ratio. In Example 14 of the invention, because the cell assembly is not heated, penetration of the polymer gel electrolyte-forming composition is not as good as in the other examples of the invention. As a result, the cycle maintenance ratio is somewhat lower, although still adequate for practical use.

In Comparative Example 1, because a polymer gel electrolyte-forming composition containing a pregel composition having a viscosity of 122 cP is used, impregnation into the cell assembly is poor and the cycle maintenance ratio is inferior to that in all the above examples of the invention.

In the inventive method for introducing a polymer gel electrolyte-forming composition into an electrical double-layer capacitor assembly or a cell assembly composed of a positive electrode, a negative electrode and a separator, the use of a pregel composition having a viscosity at 20°C of 100 cP or less gives the polymer gel electrolyte-forming composition a homogeneous solution state, facilitating impregnation of the assembly into the composition. As a result, the composition can be made to rapidly and uniformly penetrate into the assembly, and the cycle properties, electrostatic capacitance and other characteristics of the resulting secondary cell or capacitor can be improved.

Moreover, by heating the cell or capacitor assembly to at least 40°C before introducing the polymer gel electrolyte-forming composition into the assembly, the composition can be induced to penetrate the assembly even more rapidly and uniformly, thus providing secondary cells and electrical double-layer capacitors of a good performance.

## Claims

1. A method of introducing a polymer gel electrolyte-forming composition into an electrical double-layer capacitor assembly or a cell assembly composed of a positive electrode, a negative electrode and a separator, the method being **characterized by** impregnating a polymer gel electrolyte-forming composition that includes a pregel composition having a viscosity at 20°C of at most 100 cP into the assembly.

2. The method of introducing a polymer gel electrolyte-forming composition of claim 1, which method is **characterized by** heating the electrical double-layer capacitor assembly or cell assembly to at least 40°C then impregnating the heated assembly with the polymer gel electrolyte-forming composition.

3. The method of introducing a polymer gel electrolyte-forming composition of claim 2, which method is **characterized in that** the polymer gel electrolyte-forming composition has a temperature that is lower than the temperature of the heated assembly.

4. The method of introducing a polymer gel electrolyte-forming composition of claim 1, 2 or 3, which method is **characterized in that** the polymer gel electrolyte-forming composition has a viscosity at 20°C of at most 100 cP and gels at 50°C or higher.

5. A method of introducing a polymer gel electrolyte-forming composition into an electrical double-layer capacitor assembly or a cell assembly composed of a positive electrode, a negative electrode and a separator, the method being **characterized by** heating the assembly to at least 40°C, then impregnating it with the polymer gel electrolyte-forming composition.

6. The method of introducing a polymer gel electrolyte-forming composition of claim 5, which method is **characterized in that** the polymer gel electrolyte-forming composition has a temperature that is lower than the temperature of the heated assembly.

7. A method of introducing a nonaqueous electrolyte solution into an electrical double-layer capacitor assembly or a cell assembly composed of a positive electrode, a negative electrode and a separator, the method being **characterized by** heating the assembly to at least 40°C, then impregnating the heated assembly with the nonaqueous electrolyte solution.

8. The method of introducing a nonaqueous electrolyte solution of claim 7, which method is **characterized in that** the nonaqueous electrolyte solution has a temperature that is lower than the temperature of the heated assembly.

9. The method of introducing a nonaqueous electrolyte solution of claim 7 or 8, which method is **characterized in that** the nonaqueous electrolyte solution includes (A) 0.01 to 7 wt% of at least one compound selected from Compound Group (A) below, (B) an ion-conductive salt, and (C) an organic electrolyte.

   (A) maleic anhydride and derivatives thereof (A1)
   N-methylmaleimide and derivatives thereof (A2)
   N-vinylpyrrolidone and derivatives thereof (A3)
   tetrahydrofurfuryl (meth)acrylate and derivatives thereof (A4)

vinyloxazoline and derivatives thereof (A5)
propanesultone, butanesultone and derivatives thereof (A6)
vinylene carbonate and derivatives thereof (A7)
N-vinylcaprolactam and derivatives thereof (A8)
2-vinyl-1,3-dioxolane and derivatives thereof (A9)
vinylethylene carbonate and derivatives thereof (A10)
butadienesulfone (A11)
fluoroethylene carbonate (A12)
ethylene sulfite and derivatives thereof (A13)

## INTERNATIONAL SEARCH REPORT

International application No.
PCT/JP02/03936

A. CLASSIFICATION OF SUBJECT MATTER
Int.Cl[7] H01M10/40, H01M2/36, H01G9/038

According to International Patent Classification (IPC) or to both national classification and IPC

B. FIELDS SEARCHED

Minimum documentation searched (classification system followed by classification symbols)
Int.Cl[7] H01M10/40, H01M2/36, H01G9/038

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-110405 A (Sanyo Electric Co., Ltd.),<br>20 April, 2001 (20.04.01),<br>Claims 1 to 11; Par. Nos. [0042] to [0044]<br>(Family: none) | 1-8<br>9 |
| Y | JP 2000-348755 A (Mitsubishi Chemical Corp.),<br>05 December, 2000 (05.12.00),<br>Par. No. [0026]<br>(Family: none) | 9 |
| X<br>A | JP 2001-110446 A (Sanyo Electric Co., Ltd.),<br>20 April, 2001 (20.04.01),<br>Claims 1 to 6; Par. No. [0031]<br>(Family: none) | 1,4<br>2,3,5-9 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>04 July, 2002 (04.07.02) | Date of mailing of the international search report<br>16 July, 2002 (16.07.02) |
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

International application No.
PCT/JP02/03936

C (Continuation). DOCUMENTS CONSIDERED TO BE RELEVANT

| Category* | Citation of document, with indication, where appropriate, of the relevant passages | Relevant to claim No. |
|---|---|---|
| P,X | EP 1139479 A2 (Sanyo Electric Co., Ltd.), 04 October, 2001 (04.10.01), Claims and experiments section & JP 2001-273929 A & US 20010024756 A | 1,4 |
| P,X | JP 2001-283911 A (Sanyo Electric Co., Ltd.), 12 October, 2001 (12.10.01), Claims 1 to 6; Par. Nos. [0055] to [0057] (Family: none) | 1-9 |
| P,X | JP 2001-283916 A (Matsushita Electric Industrial Co., Ltd.), 12 October, 2001 (12.10.01), Claims 1 to 10; Par. Nos. [0022] to [0035] (Family: none) | 1-9 |
| A | JP 11-283672 A (Sanyo Electric Co., Ltd.), 15 October, 1999 (15.10.99), Claims 1 to 9; Par. No. [0022] (Family: none) | 1-9 |
| A | JP 11-283673 A (Sanyo Electric Co., Ltd.), 15 October, 1999 (15.10.99), Claims 1 to 11; Par. No. [0030] (Family: none) | 1-9 |

Form PCT/ISA/210 (continuation of second sheet) (July 1998)